# FASCICULE DE BREVET EUROPEEN

(11) **EP 0 493 243 B1**
(45) Date de publication et mention de la délivrance du brevet: **21.06.1995**
(21) Numéro de dépôt: 91403524.1
(22) Date de dépôt: 23.12.1991
(51) Int. Cl.: G07C 9/00, G07F 7/10

(54) **Procédé d'identification et d'authentification d'informations caractérisant un individu**
Verfahren zur Identifizierung und Beglaubigung von ein Individuum charakterisierenden Daten
Method for the identification and authentification of data characterizing an individual

(30) Priorité: 28.12.1990 FR 9016447
(43) Date de publication de la demande: 01.07.1992
(73) Titulaire: FRANCE TELECOM, 92131 Issy les Moulineaux (FR)
(72) Inventeur: Villa, Pierre, F-94260 Fresnes (FR)
(74) Mandataire: Dubois-Chabert, Guy

(56) Documents cités:
- WO-A-82/03286
- WO-A-89/00741
- WO-A-89/03099
- FR-A- 2 578 340
- US-A- 4 151 512
- US-A- 4 210 899
- US-A- 4 630 308

## Description

L'invention concerne un procédé d'identification et d'authentification d'informations caractérisant un individu par vérification de ces informations au moyen d'un biomètre.

Un biomètre est un appareil capable d'effectuer la saisie et le traitement d'informations relatives à un individu. L'information saisie est couramment dénommée profil ; on lui associe lors d'une vérification d'authentification une information d'identification telle que le nom de l'individu.

Parmi les profils saisis, il y a l'empreinte digitale, l'empreinte du fond de l'oeil, ou bien un mouvement difficilement imitable tel que la signature, la frappe sur un clavier, les vibrations des cordes vocales.

Le traitement de ce type d'information consiste en fait à numériser et à réduire le volume de l'information numérisée par des techniques classiques de compression. Généralement le biomètre comporte pour cela un moyen de traitement et de contrôle dénommé SAM (secure access module en terminologie anglo-saxonne).

Lors d'une vérification biométrique, un individu peut se soumettre à une saisie de profil et donner son identité. Il peut aussi simplement n'avoir à donner que son identité. Des vérifications biométriques de ce genre sont connues des documents FR-A-2578340 et WO-A-8203286.

Le problème rencontré réside dans le fait qu'il peut y avoir une falsification soit dans l'information d'identification, soit dans le profil antérieurement enregistré. Il n'est donc pas possible d'assurer une parfaite corrélation entre identification et authentification.

En d'autres termes, une empreinte peut toujours être reconnue comme appartenant à un individu présent lors de la saisie mais ce dernier peut abuser le vérificateur en se faisant passer pour un autre s'il désire tricher. Il suffit d'adjoindre une identification fausse à une authentification vraie en falsifiant par exemple l'identification lors de sa communication au biomètre ou inversement.

La présente invention permet de remédier à ces inconvénients. L'invention, telle qu'elle est caractérisée dans les revendications, résout le problème du manque de corrélation entre l'identification et l'authentification des informations caractéristiques relatives à un individu et cela en liant ces informations par un enregistrement sur un même support et en vérifiant ces informations sans échange du profil en clair ou chiffré.

La présente invention a plus particulièrement pour objet un procédé d'identification et d'authentification d'informations caractérisant un individu, par vérification de ces informations au moyen d'un biomètre caractérisé en ce qu'il consiste :
a) à enregistrer sur une carte à mémoire les informations caractérisant l'individu titulaire de la carte, informations composées de l'identification et du profil de l'individu sous forme d'une empreinte constituée d'une suite séquentielle de mots binaires obtenue par un biomètre ;
b) à saisir de manière indépendante par un biomètre les informations caractérisant cet individu de manière à obtenir son empreinte pour la comparer à celle de la carte ;
c) à procéder à un traitement identique de l'empreinte dans la carte et dans le biomètre de manière à établir un mot de parité et à échanger les mots de parité obtenus par la carte et par le biomètre pour les comparer.

Selon une autre caractéristique de l'invention, la phase de traitement consiste à :
- organiser virtuellement des groupes séquentiels de mots en p sous-blocs matriciels de P bits,
- organiser virtuellement les sous-blocs matriciels en un seul bloc matriciel de M lignes, N colonnes,
- réaliser des permutations des sous-blocs dans le bloc matriciel M x N,
- réaliser des permutations des mots à l'intérieur des sous-blocs matriciels ;
- déterminer un mot de parité pour chaque ligne du bloc matriciel M x N ;
- échanger les parités obtenues dans la carte et dans le biomètre ;
- comparer ces parités ;
- traiter l'empreinte en fonction du résultat des comparaisons ;
- donner une décision sur l'identification et l'authentification en fonction du résultat du traitement.

Selon une autre caractéristique de l'invention, la réalisation des permutations des sous-blocs consiste à :
- générer dans la carte une première série de nombres aléatoires et la transmettre au biomètre ;
- générer dans le biomètre une deuxième série de nombres aléatoires et la transmettre à la carte ;
- constituer une première table contenant l'adresse X1 de chaque sous-bloc dans le bloc matriciel et l'adresse correspondante X2 donnée par la première série de nombres aléatoires ;
- constituer une deuxième table contenant l'adresse X2 obtenue après la première permutation et l'adresse X3 donnée par la deuxième série de nombres aléatoires.

Selon une autre caractéristique de l'invention, l'étape de comparaison des parités consiste à :
- calculer la distance entre les parités obtenues par la carte et celles obtenues par le biomètre,
- interrompre la vérification dans le cas où la distance est sensiblement égale à une distance donnée ;
- réaliser une troisième permutation des sous-blocs et des mots dans les sous-blocs ;
- déterminer un mot de parité pour chaque ligne du bloc matriciel,
- échanger les parités ainsi obtenues dans la carte et dans le biomètre.

Selon une autre caractéristique de l'invention, l'étape de correction effectuée par le biomètre consiste à affecter un mot à chaque ligne de mot des sous-blocs destiné à indiquer si les bits formant chaque mot sont probablement justes ou probablement faux ou définitivement justes.

D'autres caractéristiques et avantages de l'invention apparaîtront à la lecture de la description faite à titre illustratif et nullement limitatif, en regard des dessins sur lesquels :
- la figure 1 représente les différentes étapes du procédé conforme à l'invention sous forme d'un organigramme ;
- la figure 2 représente le détail de certaines étapes du procédé selon la figure 1;
- les figures 3a, 3b, 3c représentent des graphiques illustrant l'organisation pratique et virtuelle de l'empreinte ;
- les figures 4a à 4d des graphiques illustrant les permutations des sous-blocs ;
- les figures 4e à 4h des graphiques illustrant les permutations à l'intérieur des sous-blocs ;
- les figures 5a et 5b les tables A et B ;
- les figures 5c et 5d les tables a et b.

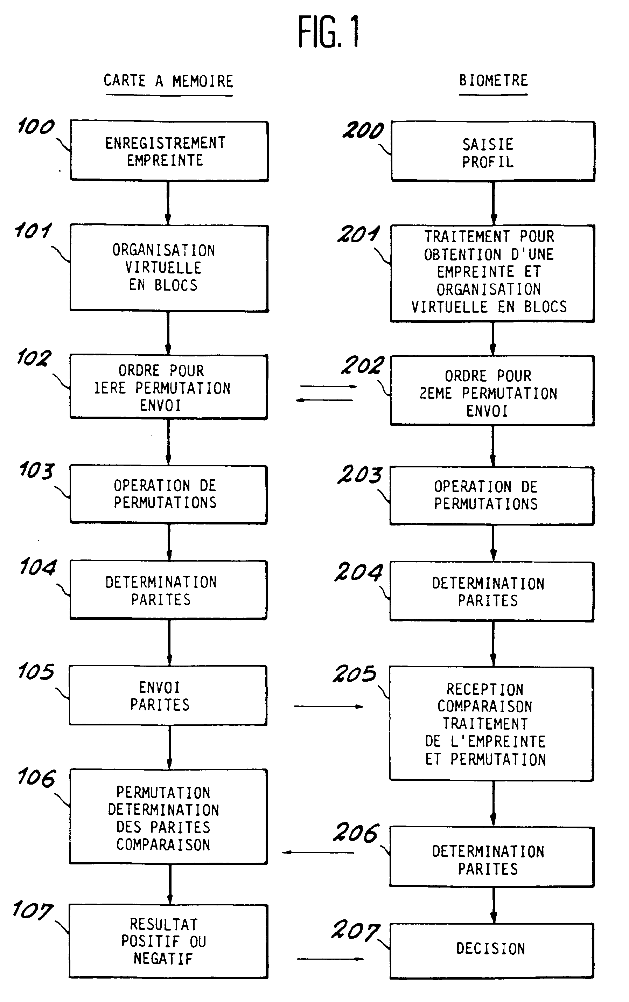

La figure 1 représente les étapes principales du procédé conforme à l'invention sous forme d'un organigramme.

Un individu pour lequel des contrôles biométriques sont nécessaires est titulaire d'une carte du type carte à mémoire dénommée CAM. La carte à mémoire possède de manière classique des moyens de traitement de contrôle et de mémorisation qui ne seront pas davantage détaillés car ils font partie de l'état de la technique.

La CAM qui est remise à son titulaire comporte un enregistrement du profil et l'identification de ce titulaire.

Le profil enregistré a subi un prétraitement classique qui a consisté à réaliser une compression des données numériques.

Lors d'une vérification biométrique, on procède à nouveau à une saisie du profil du titulaire de la carte. Cette saisie est indépendante de la première à la fois dans le temps et dans l'espace. Le biomètre qui réalise cette deuxième saisie n'est pas obligatoirement le même que celui qui a servi à la première. Ce profil subit également un prétraitement consistant à compresser les données numériques.

Le procédé conforme à l'invention consiste ensuite à réaliser des étapes de traitement qui vont être développées dans la suite et qui sont identiques pour la plupart.

Les étapes qui portent les références 100 à 107 sont mises en oeuvre dans la carte. Les étapes qui portent les références 200 à 207 sont mises en oeuvre dans les moyens de traitement que comporte le biomètre et qui ont une architecture similaire à celle de la carte.

Les flèches horizontales entre les blocs de traitement de la carte et du biomètre signifient qu'il y a un échange d'information entre la carte et le biomètre. Comme cela va être détaillé dans la suite, les informations échangées ne sont en aucun cas les données correspondant au profil.

### Etapes 100-200

Les données enregistrées dans la carte et dans le biomètre sont enregistrées sous la forme d'une suite séquentielle de mots binaires.

### Etapes 101-201

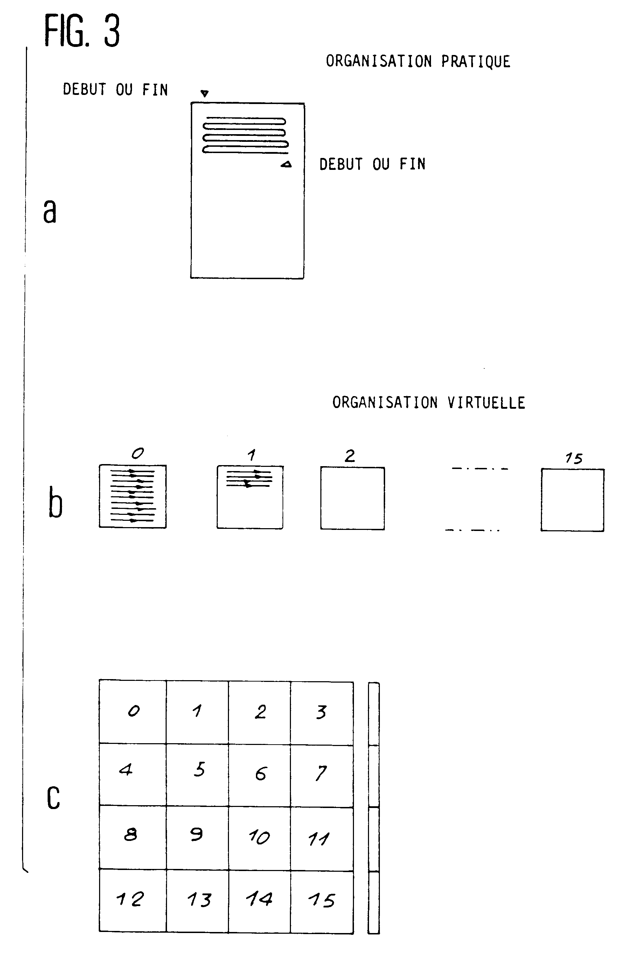

Ces données sont organisées virtuellement en blocs comme on peut le voir à partir des graphiques représentés sur les figures 3a, 3b, 3c.

L'organisation reste virtuelle, en ce sens que l'on ne constitue pas matériellement pour le mémoriser et l'examiner ensuite un autre profil que celui d'origine. Les parités dont on parlera dans la suite sont déterminées au fur et à mesure des déplacements des sous-blocs et des permutations internes de ces derniers.

Une première organisation virtuelle, figure 3b, consiste à diviser la suite séquentielle de mots binaires représentée figure 3a, en sous-blocs.

Une deuxième organisation virtuelle, figure 3c, consiste à regrouper les p sous-blocs en un seul bloc matriciel de manière à avoir une matrice de taille M x N = p. A titre d'exemple, les sous-blocs sont numérotés de 0 à 15 et comportent 64 bits. Les derniers blocs et le bloc incomplet sont éventuellement complétés par des zéros.

La matrice M x N comporte selon cet exemple seize sous-blocs et constitue un bloc de 1024 bits.

### Etapes 102,103-202,203

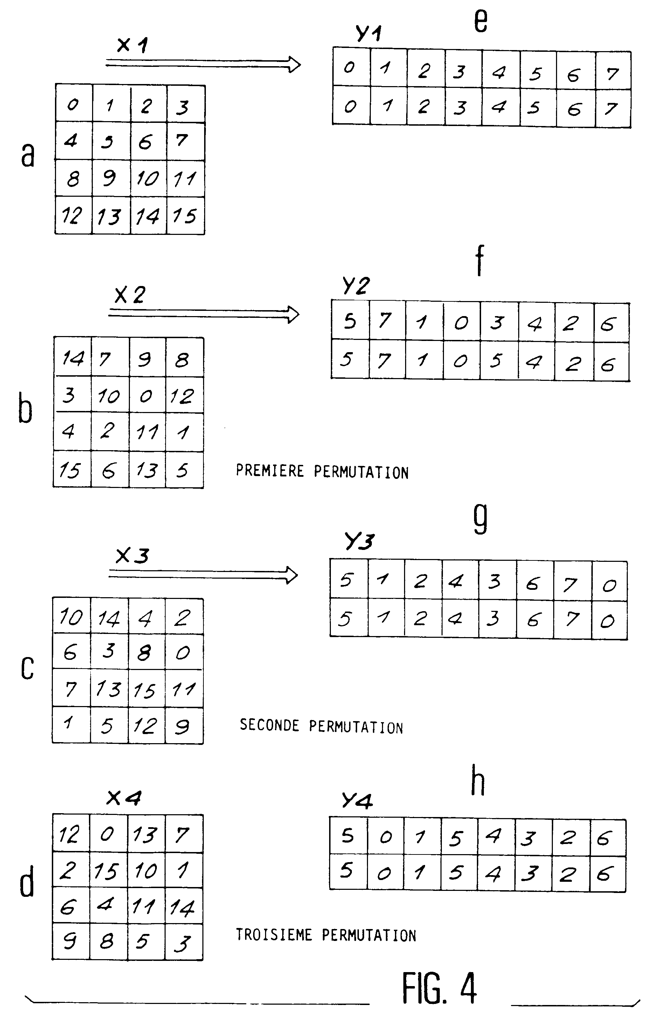

Le procédé consiste ensuite à réaliser des permutations de la manière qui va être décrite et en référence aux graphiques représentés sur les figures 4a à 4h.

Les seize sous-blocs sont ordonnés dans la matrice M x N comme représenté sur la figure 4a, c'est-à-dire dans l'ordre séquentiel des sous-blocs 0 à 15.

Les emplacements virtuels des sous-blocs dans la matrice sont appelés adresses X1.

Une première permutation des sous-blocs dans la matrice va permettre d'obtenir de nouveaux emplacements appelés adresses X2.

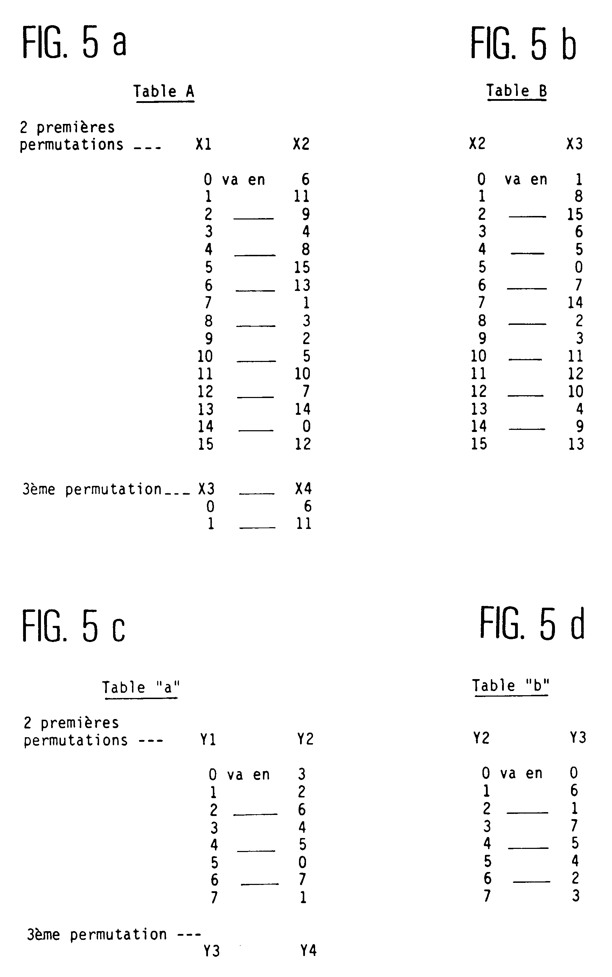

Une deuxième permutation des sous-blocs dans cette organisation va permettre d'obtenir de nouveaux emplacements appelés adresses X3. Le passage d'une adresse X1 à une adresse X2 est donné par une table A, figure 5a. Le passage d'une adresse X2 à une adresse X3 est donné par une table B, Figure 5b.

Les étapes 102, 103-202,203 consistent en outre à réaliser des permutations à l'intérieur des sous-blocs.

A titre d'exemple chaque ligne d'un sous-bloc comporte 8 bits numérotés de 0 à 7.

Dans chaque sous-bloc les bits sont déjà ordonnés selon l'ordre séquentiel d'entrée. Les emplacements virtuels dans le sous-bloc sont appelés adresses Y1 (figure 4e).

Après une première permutation, les bits se trouvent dans un ordre différent correspondant aux adresses Y2 (figure 4f).

Après une deuxième permutation, les bits se trouvent encore dans un ordre différent correspondant aux adresses Y3 (figure 4g).

Le passage d'une adresse Y1 à une adresse Y2 est donné par la table a (figure 5c).

Le passage d'une adresse Y2 à une adresse Y3 est donné par la table b (figure 5d).

Les différentes permutations sont réalisées à partir de nombres aléatoires définissant l'ordre dans lequel vont se trouver les sous-blocs, c'est-à-dire les adresses X2 puis X3.

Les valeurs qui sont données dans les tables A, B, a et b ainsi que les aléas sont donnés à titre d'exemple.

Pour la table A à 16 entrées :
**aléas** : 0110 . 1011 . 1001 . 0100 . 0110 . 1000 . 1.... ce qui correspond aux adresses X2 :
6 - 11 - 9 - 4 - 6* - 8
6* = cette valeur a déjà été donnée, elle est délaissée -on prend la valeur suivante.

Pour la table B à 16 entrées, on prend les aléas obtenus pour constituer la table A mais décalés de deux bits, soit :
**aléas** : ..1010 . 1110 . 0101 . 0001 . 1010 . 0....
ce qui correspond pour X3 :
10 - 14 - 5 - 1 - 10.....

Pour la table a à 8 entrées, on prend les mêmes aléas en prenant des paquets de 3 bits, soit :
011 . 010 . 111 . 001 . 010 . 001......
ce qui correspond pour Y2 à :
3 - 2 - 7 - 1 - 2* - 1* - 5 - ......

Pour la table b à 8 entrées, on décale de 2 bits les aléas, soit :
101 . 011 . 100 . 101 . .......
ce qui correspond pour Y3 à :
5 - 3 - 4 - 5 .....

### Etapes 104-204 :

Ces étapes consistent à déterminer des mots de parité comme après chaque permutation.

Un mot de parité est formé à partir du dernier bit de chaque ligne de la matrice. Selon l'exemple décrit, le mot de parité ainsi formé comprend trente-deux mots de quatre bits virtuellement situés après les sous-blocs 3, 7, 11, 15.

### Etapes 105-205 :

Ces étapes consistent à échanger les bits de parité entre la carte et le biomètre. En pratique, il n'y a pas d'échange bidirectionnel. Le biomètre reçoit les bits de parité obtenus par la carte et réalise un traitement consistant à comparer les bits de parité obtenus de part et d'autre et ensuite à modifier sensiblement l'empreinte qu'il a saisie pour tenir compte de légères évolutions qu'a pu subir le profil avec le temps.

Ces traitements de modification sont détaillés dans la suite.

Selon le résultat de ce traitement, une troisième permutation est alors opérée. Cette permutation est réalisée comme le sont la première et la deuxième, c'est-à-dire par une double permutation. Une permutation est opérée pour les sous-blocs constituant la matrice et une permutation a lieu à l'intérieur des sous-blocs.

Le bloc représenté sur la figure 4d est le résultat de la troisième permutation.

Les adresses X3 des sous-blocs sont transformées en adresses X4 à l'issue de la troisième permutation (figure 4d). De la même façon, les adresses Y3 des bits à l'intérieur des sous-blocs (figure 4g) sont transformées en adresses Y4 à l'issue de la quatrième permutation (figure 4h).

A la suite de ces permutations, un nouveau mot de parité est déterminé dans la carte et par le biomètre. Ce mot est constitué selon l'exemple donné d'un ensemble de trente-deux mots de quatre bits virtuellement situés après chacun des sous-blocs 7, 1, 14, 3.

Les parités obtenues dans le biomètre sont envoyées à la carte qui les compare à celles qu'elle a obtenues.

### Etapes 107-207 :

A la suite de la comparaison, la carte envoie un message traduisant s'il y a conformité ou non conformité. Le biomètre peut alors prendre une décision sur l'identification et l'authenticité du profil saisi.

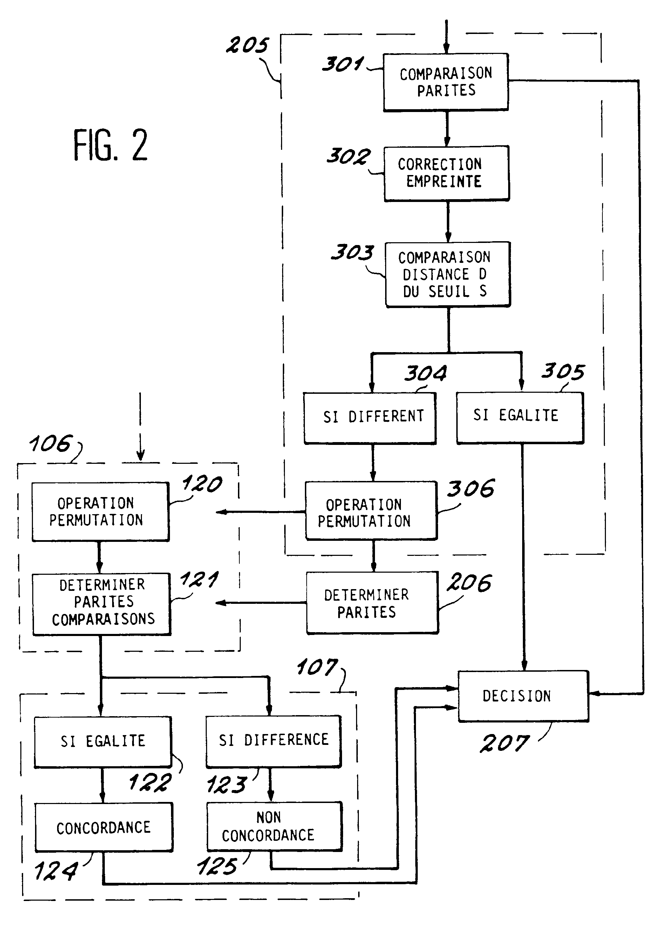

Les étapes 106 et 205 ont été détaillées sur la figure 2.

L'étape 205 consiste à réaliser une comparaison des parités, étape 301, obtenues à l'issue de la deuxième permutation. Dans le cas d'une égalité entre les parités, une décision sur l'identification et l'authentification est prise.

Dans le cas où il n'y a pas identité, on procède à une correction de l'empreinte (étape 302). On procède ensuite à une comparaison entre l'empreinte saisie et l'empreinte corrigée par une mesure de la distance D que l'on compare à un seuil S prédéterminé (étape 303).

Si la distance D mesurée est différente du seuil (étape 304) ou si le biomètre souhaite une certification de concordance par la carte, alors on procède à une troisième permutation (306).

Dans le cas où il y a égalité entre la distance D et le seuil S, alors le biomètre prend une décision qui peut être la commande d'une troisième permutation.

Après avoir réalisé la troisième permutation, un mot de parité est déterminé (étape 206) comme cela a été décrit antérieurement.

L'étape 106 consiste à réaliser la troisième permutation (étape 120), puis à déterminer le mot de parité S pour le comparer aux parités déterminées par le biomètre (étape 121).

L'étape 107 consiste comme cela a déjà été décrit à déclarer qu'il y a concordance (étape 124) ou non concordance (étape 125) entre identification et authentification.

L'étape 302 consiste à réaliser une modification de l'empreinte de manière à corriger les éventuelles évolutions qu'a pu prendre le profil en restreignant la distance d entre les deux profils.

Pour cela, les mots constituant chaque ligne dans un sous-bloc sont associés à un mot de trois bits qui sert à mémoriser l'information qui consiste à dire :
- bit 1 :: les huit bits parmi les trente-deux de la rangée sont probablement justes.
- bit 2 :: les huit bits sont probalement faux.
- bit 3 :: les huit bits sont considérés comme définitivement justes.

Lors de la permutation des sous-blocs réalisée dans le biomètre, ces trois bits vont rester attachés aux huit bits de chaque rangée des sous-blocs.

Le biomètre compare les données de parité de quatre bits pour chaque rangée de trente-deux bits dans les sous-blocs.

L'absence de différence peut correspondre à l'absence d'erreur sur les trente-deux bits ou à un nombre d'erreurs tel que les parités se compensent.

Lorsque deux bits de parité sur les quatre sont différents, le biomètre considère, éventuellement à tort, qu'un seul bit de la rangée de trente-deux est erroné et que l'erreur se trouve dans l'un des sous-blocs de huit bits de la rangée.

A moins de pouvoir rectifier l'un des bits de l'une des rangées de huit, le biomètre écrit ou confirme l'écriture du bit 2 (probablement faux) dans chaque rangée de sous-blocs.

Le procédé permet d'exclure les cas suivants dans le biomètre :
- le bit 3 de la rangée du sous-bloc est déjà servi (juste).
- le bit 1 (probablement juste) est déjà servi, le biomètre efface alors cette écriture.

Le biomètre procède de même conformément au procédé lorsqu'un, trois ou quatre bits de parité sont erronés.

Le traitement qui vient d'être décrit vise à corriger le profil saisi pour chercher à le rendre identique à celui détenu par la carte.

Ceci n'est possible que si au moins une rangée du bloc est identique de part et d'autre à chaque permutation et si le nombre de bits erronés dans une rangée de trente-deux est fréquemment inférieur à deux.

Lorsque ces conditions se produisent, les sous-blocs de huit bits peuvent être déclarés justes les uns après les autres et participer à la correction complète du profil (empreinte).

Le procédé permet de recommencer l'étape de correction autant de fois que nécessaire, la limite étant une limite temporelle correspondant à la durée de la mesure biométrique.

## Revendications

1. Procédé d'identification et d'authentification d'informations caractérisant un individu, par vérification de ces informations au moyen d'un biomètre, caractérisé en ce qu'il consiste :
A) à enregistrer sur une carte à mémoire les informations caractérisant l'individu titulaire de la carte, informations composées de l'identification et du profil de l'individu sous forme d'une empreinte constituée d'une suite séquentielle de mots binaires obtenue par un biomètre ;
B) à saisir de manière indépendante par un biomètre les informations caractérisant cet individu de manière à obtenir son empreinte pour la comparer à celle de la carte ;
C) à procéder à un traitement identique de l'empreinte dans la carte et dans le biomètre, de manière à établir un mot de parité et à échanger les mots de parité obtenus par la carte et par le biomètre pour les comparer.

2. Procédé selon la revendication 1, caractérisé en ce que la phase C) de traitement consiste à :
- organiser virtuellement des groupes séquentiels de mots en p sous-blocs matriciels de P bits,
- organiser virtuellement les sous-blocs matriciels en un seul bloc matriciel de M lignes, N colonnes,
- réaliser des permutations des sous-blocs dans le bloc matriciel M x N,
- réaliser des permutations des mots à l'intérieur des sous-blocs matriciels ;
- déterminer un mot de parité pour chaque ligne du bloc matriciel M x N ;
- échanger les parités obtenues dans la carte et dans le biomètre ;
- comparer ces parités ;
- traiter l'empreinte en fonction du résultat des comparaisons ;
- donner une décision dans la carte sur l'identification et l'authentification en fonction du résultat du traitement.

3. Procédé de corrélation selon la revendication 1 ou 2, caractérisé en ce que la réalisation des permutations des sous-blocs consiste à :
- générer dans la carte une première série de nombres aléatoires et la transmettre au biomètre,
- générer dans le biomètre une deuxième série de nombres aléatoires et transmettre ces nombres à la carte ;
- constituer une première table contenant les adresses X1 de chaque sous-bloc dans le bloc matriciel et les adresses correspondantes X2 données par la première série de nombres aléatoires ;
- constituer une deuxième table contenant les adresses X2 obtenues après la première permutation et les adresses X3 données par la deuxième série de nombres aléatoires.

4. Procédé de corrélation selon les revendications 1, 2 ou 3, caractérisé en ce que l'étape de comparaison des parités consiste à :
- calculer la distance entre les parités obtenues par la carte et celles obtenues par le biomètre,
- à interrompre la vérification dans le cas où la distance est sensiblement égale à une distance donnée ;
- dans le cas où la distance obtenue est différente de la distance donnée, réaliser des corrections sous-blocs par sous-blocs,
- réaliser une troisième permutation des sous-blocs et des mots dans les sous-blocs,
- déterminer un mot de parité pour chaque ligne du bloc matriciel,
- échanger les parités ainsi obtenues dans la carte et dans le biomètre.
- comparer les parités au stade ultime dans la carte,
- déclarer qu'il y a ou non corrélation en fonction des résultats de la comparaison.

5. Procédé selon l'une quelconque des revendications précédentes, caractérisé en ce que l'étape de correction consiste à affecter un mot à chaque ligne de mots des sous-blocs destiné à indiquer si les bits formant chaque mot sont probablement justes ou probablement faux ou définitivement justes.

## Patentansprüche

1. Verfahren zur Identifizierung und Beglaubigung von ein Individium charakterisierenden Daten durch überprüfung dieser Daten und mittels eines Biometers,
**dadurch gekennzeichnet**, daß es darin besteht:
A) die die Karteninhaber-Person charakterisierenden Daten auf einer Speicherkarte aufzuzeichnen, wobei diese Daten sich zusammensetzen aus der Identifizierung und dem Profil bzw. den typischen Merkmalen der Person in Form eines Abdrucks, gebildet durch eine sequentielle Folge von Binärwörtern, erhalten durch ein Biometer;
B) die diese Person charakterisierenden Daten durch ein Biometer auf unabhängige Weise zu erfassen, um ihren Abdruck zu erhalten, um ihn mit dem der Karte zu vergleichen;
C) eine identische Verarbeitung des Abdrucks in der Karte und in dem Biometer durchzuführen, um ein Paritätswort zu erstellen und die Paritätswörter auszutauschen, die man durch die Karte und durch das Biometer erhalten hat, um sie zu vergleichen.

2. Verfahren nach Anspruch 1, dadurch gekennzeichnet, daß die Phase C) der Verarbeitung aus den folgenden Schritten besteht:
- virtuelles Organisieren der sequentiellen Wörtergruppen in p Matrix-Unterblöcken mit P Bits,
- virtuelles Organisieren der Matrix-Unterblöcke in einem einzigen Matrixblock mit M Zeilen und N Spalten,
- Ausführen von Permutationen der Unterblöcke in dem Matrixblock M x N,
- Ausführen von Permutationen der Wörter im Innern der Matrix-Unterblöcke;
- Festlegen eines Paritätsworts für jede Zeile des Matrixblocks M x N;
- Austauschen der in der Karte und in dem Biometer erhaltenen Paritäten;
- Vergleichen dieser Paritäten;
- Verarbeiten der Abdrücke in Abhängigkeit vom Resultat der Vergleiche;
- Liefern einer Entscheidung in der Karte bezüglich der Identifizierung und der Beglaubigung in Abhängigkeit vom Resultat der Verarbeitung.

3. Korrelationsverfahren nach Anspruch 1 oder 2, dadurch gekennzeichnet, daß die Ausführung der Permutationen der Unterblöcke darin besteht:
- in der Karte eine erste Serie Zufallszahlen zu erzeugen und sie an das Biometer zu übertragen,
- in dem Biometer eine zweite Serie Zufallszahlen zu erzeugen und diese Zahlen an die Karte zu übertragen;
- eine erste Tabelle zu erstellen, die die Adressen X1 jedes Unterblocks in dem Matrixblock enthält und die entsprechenden Adressen X2, geliefert durch die erste Serie Zufallszahlen;
- eine zweite Tabelle zu erstellen, die die nach der ersten Permutation erhaltenen Adressen X2 enthält und die Adressen X3, geliefert durch die zweite Serie Zufallszahlen.

4. Korrelationsverfahren nach einem der Ansprüche 1, 2 oder 3, dadurch gekennzeichnet, das der Paritäten-Vergleichsschritt darin besteht:
- den Abstand zwischen den durch die Karte erhaltenen und den durch das Biometer erhaltenen Paritäten zu berechnen,
- die Überprüfung zu unterbrechen falls der Abstand im wesentlichen gleich einem gegebenen Abstand ist;
- Korrekturen auszuführen, Unterblock für Unterblock für den Fall, daß der erhaltene Abstand verschieden ist von dem gegebenen Abstand,
- eine dritte Permutation der Unterblöcke und der Wörter in diesen Unterblöcken auszuführen,
- ein Paritätswort festzulegen für jede Zeile des Matrixblocks,
- die so in der Karte und in dem Biometer erhaltenen Paritäten auszutauschen,
- die Paritäten im Endstadium in der Karte zu vergleichen,
- in Abhängigkeit von den Resultaten des Vergleichs zu erklären, ob Korrelation besteht oder nicht.

5. Verfahren nach einem der vorhergehenden Ansprüche, dadurch gekennzeichnet, daß der Korrekturschritt darin besteht, jeder Wörterzeile der Unterblöcke ein Wort zuzuordnen, dazu bestimmt, anzugeben ob die jedes Wort bildenden Bits wahrscheinlich richtig sind oder wahrscheinlich falsch sind oder definitiv richtig.

## Claims

1. Process for identifying and authenticating data characteizing an individual, by verifying said data using a biometer, characterized in that:
A) recording on a memory card the data characterizing the individual owner of the card, said data including the identification and the profile of the individual in the form of an imprint consisting of a sequential string of binary words obtained by a biometer;
B) acquiring independently of said records, using a biometer, the data characterizing said individual so as to obtain his imprint to compare it with that of the card;
C) proceeding to an identical processing of the imprint in the card and in the biometer, so as to establish a parity word and to exchange the parity words obtained by the card and by the biometer to compare them.

2. Process according to claim 1, characterized in that the processing phase C) consists of:
organizing in a virtual manner sequential groups of words into p matrix sub-blocks of P bits;
organizing in a virtual manner the matrix sub-blocks into a single matrix block of M rows, N columns;
performing permutations of the sub-blocks in matrix block M x N;
performing permutations of the words inside the matrix sub-blocks;
determining the parity word for each row of matrix block M x N;
exchanging the parities obtained in the card and in the biometer;
comparing these parities;
processing the imprint as a function of the result of the comparisons;
providing a decision on the identification and authentification as a function of the result of the processing.

3. Correlation process according to claim 1 or 2, characterized in that the permutations of the sub-blocks consist of:
generating in the card a first series of random numbers and transmitting it to the biometer;
generating in the biometer a second series of random numbers and transmitting it to the card;
constituting a first table containing the X1 addresses of each sub-block in the matrix block and the corresponding X2 addresses provided by the first series of random numbers;
constituting a second table containing the X2 addresses obtained after the first permutation and the X3 addresses provided by the second series of random numbers.

4. Correlation process according to claim 1,2 or 3, characterized in that the step of comparing the parities consists of:
calculating the distance between the parities obtained by the card and those obtained by the biometer;
interrupting the verification in the case where the distance is approximately equal to a given distance;
performing corrections sub-block by sub-block, in the case where the distance obtained is different from the distance given;
performing a third permutation of the sub-blocks and of the words in the sub-blocks;
determining a parity word for each row of the matrix block;
exchanging the parities thus obtained in the card and in the biometer;
comparing the parities with the final stage in the card;
declaring that there is or is not correlation as a function of the results of the comparison.

5. Process according to any one of the preceding claims, characterized in that the step of performing corrections includes the step of assigning a word to each row of words of the sub-blocks intended to indicate whether the bits forming each word are probably right or probably wrong or definitely right.
